# EUROPÄISCHE PATENTSCHRIFT

(11) **EP 3 638 537 B1**
(45) Veröffentlichungstag und Bekanntmachung des Hinweises auf die Patenterteilung: **05.04.2023**
(21) Anmeldenummer: 18731443.0
(22) Anmeldetag: 14.06.2018
(51) Int. Cl.: B60N 2/70, B60N 2/90

(54) **POLSTERTEIL EINES FAHRZEUGSITZES MIT EINEM UMSCHÄUMTEN 3D-FORMVLIES ZUR VERSTEIFUNG EINER SEITENWANGE**
UPHOLSTERY PART OF A VEHICLE SEAT WITH AN OVERMOULDED 3D NONWOVEN FABRIC FOR REINFORCING OF A SIDE SUPPORT
PIÈCE DE REMBOURRAGE DE SIÈGE DE VÉHICULE AVEC UNE COUCHE NON-TISSÉE 3D SURMOULÉ POUR RENFORCER UN SUPPORT LATÉRAL

(30) Priorität: 14.06.2017 DE 102017113098
(43) Veröffentlichungstag der Anmeldung: 22.04.2020
(73) Patentinhaber: Sitech Sitztechnik GmbH, 38442 Wolfsburg (DE); Proseat GmbH & Co. KG, 64546 Mörfelden-Walldorf (DE)
(72) Erfinder: MEYER, Nikolaus, 38162 Cremlingen (DE); FANGMANN, Andreas, 27259 Varrel (DE)
(74) Vertreter: Gulde & Partner
(86) Internationale Anmeldenummer: PCT/EP2018/065803
(87) Internationale Veröffentlichungsnummer: WO 2018/229185

(56) Entgegenhaltungen:
- JP-A- 2007 050 133
- JP-A- 2016 150 223
- KR-A- 20130 027 799
- US-A1- 2007 241 604
- US-A1- 2010 102 599

## Beschreibung

Die Erfindung betrifft einen Fahrzeugsitz mit einem Polsterteil, welches ein Schaumteil umfasst, welches eine Stützstruktur in der Art eines Formvlieses aufweist, welches nach einem Einschäumvorgang innerhalb eines Schauprozesses mit dem Schaumteil in fester Verbindung steht.

Die Druckschrift US 2016/0288681 A1 beschreibt einen Fahrzeugsitz, der eine untere Sitzstruktur und eine erhöhte Sitzlehnenabstützung umfasst, wobei entweder eine der unteren Sitzstrukturen oder eine erhöhte Sitzlehnenunterstützung aus einer mehrschichtigen Anordnung besteht. Die Mehrschichtanordnung umfasst eine flexible statische Schicht, eine flexible dynamische Schicht mit einer einstellbaren Festigkeit, eine sogenannte Aufhängeschicht, die aus abstimmbaren Federn gebildet ist, die eine flexible Platte tragen, und einen Rahmenträger, der eine Schutzvertiefung enthält, in der die Aufhängungsschicht eingeschlossen ist.

Die Druckschrift US 2013/0300178 A1 offenbart einen Fahrzeugsitz mit einem Polsterkissen, einem Flächenelement und einem starren Element. Eine Kissenauflage kann mit einem Hauptabschnitt zum Stützen eines Insassen und einem Seitenstützabschnitt versehen sein, der auf einer Seite des Hauptabschnitts vorgesehen ist. Der Seitenstützabschnitt kann von dem Hauptabschnitt vorstehen, um den Insassen zu stützen. Ein Flächenelement ist auf einer Oberfläche des Polsterkissens vorgesehen. Das starre Element ist innerhalb des seitlichen Stützabschnitts des Polsterkissens vorgesehen. Das starre Element hat eine höhere Steifigkeit als das Polsterkissen und ragt in die gleiche Richtung vor, in der der Seitenstützabschnitt vorsteht. Das starre Element weist einen Endabschnitt auf, der das Flächenelement berührt.

Außerdem ist aus der Druckschrift DE 10 2010 011 886 A1 ein Fahrzeugsitz bekannt, der ein als Sitzkissen ausgebildetes Sitzteil aufweist, welches Seitenwangen umfasst, die jeweils in einem Hohlraum pneumatisch betätigbare Luftkammern für die Verstellung der Seitenwangen besitzt. Der Hohlraum mit den Seitenwangen ist mit einem Formvlies ausgekleidet und das Formvlies ist in einem den Luftkammern unmittelbar zugerichteten Flächenbereich mit beabstandeten Längsschlitzen versehen. Diese Längsschlitze dienen dazu, einen Verstellweg beim Aufblasen beziehungsweise beim Evakuieren zu gewährleisten. Durch das Formvlies wird das Schaumteil des Sitzkissens an den Kanten steifer, wogegen durch die bereichsweisen Längsschlitze im Formvlies das Schaumteil des Sitzkissens elastischer wird.

Ergänzend werden als weiterer Stand der Technik noch die Druckschriften US 2007/241604 A1, JP 2007-50133 A, KR10-2013-0027799 A, JP 2016-150223 A und US 2010/102599A1 genannt. Die Druckschriften beschäftigen sich mit der Versteifung von Schaumteilen, wobei insbesondere die Versteifung von Seitenwangen der Sitzteile und/oder Rückenlehnenteile jeweils im Mittelpunkt der dargestellten Lösungen liegen.

Der Erfindung liegt die Aufgabe zugrunde, eine einfache Möglichkeit zur Stabilisierung des Schaumteils eines Polsterteils einer Seitenwange zu schaffen.

Ausgangspunkt der Erfindung ist ein Polsterteil mit einer Seitenwange, für einen Fahrzeugsitz, das zumindest ein Schaumteil umfasst, welches in einem Schäumprozess mit einem vorgefertigten Formvlies eine feste Verbindung bildet, wobei das Formflies eine Stützstruktur für das Schaumteil bildet, wobei das Formvlies mindestens einen lokal angeordneten offenen Hohlraum aufweist der abschnittsweise ausgeschäumt ist, sodass das Schaumteil zumindest in einem Abschnitt des Hohlraums des Formvlieses eine in den Schaum eingeschäumte Stütz- und Versteifungsstruktur aufweist.

Erfindungsgemäß ist vorgesehen, dass das Formvlies einen ersten uneingeschäumten Abschnitt des Hohlraums im vorderen Bereich der Seitenwange bildet, in dem ein Sportbügel aufnehmbar ist und in einem zweiten eingeschäumten Abschnitt des Hohlraums im hinteren Bereich der Seitenwange den Schaum aufnimmt.

Im Zusammenbauzustand sind Sportbügel für einen Fahrzeugsitz, insbesondere einen Sportfahrzeugsitz, im vorderen Bereich des Sitzteils angeordnet.

Das Formvlies bildet die Stütz- und Versteifungsstruktur, die während des Einschäumens des Formvlieses in das Schaumteil eingeschäumt beziehungsweise umschäumt wird. Zur Umschäumung bildet das Formvlies zumindest abschnittsweise den Hohlraum, dessen Außenkontur an die Seitenwange beziehungsweise an das Schaumteil der Seitenwange angepasst ist. Der Hohlraum benötigt mindestens eine Öffnung, damit der Schaum in den Hohlraum eindringen kann.

Ein weiterer Vorteil der Erfindung besteht darin, dass die Stütz- und Versteifungsstruktur des in dem Schaumteil integrierten Formvlieses in bevorzugter Ausgestaltung der Erfindung zumindest abschnittsweise eine dreidimensionale Kontur aufweist, die im Wesentlichen einer Kontur der Seitenwange entspricht. Der Vorteil besteht darin, dass in einfacher Weise durch entsprechende Formgebung des Formvlieses in der gewünschten Kontur abschnittsweise eine Versteifung und Abstützung des Schaumteils, insbesondere des Schaumes im Bereich der Seitenwangen ermöglicht wird.

Bevorzugt ist vorgesehen, dass die Stütz- und Versteifungsstruktur des in dem Schaumteil integrierten Formvlieses zumindest abschnittsweise eine U-förmige dreidimensionale Kontur aufweist, die im Wesentlichen der Kontur der Seitenwange entspricht, wobei die Öffnung des Hohlraums auf einer der Oberseite der Seitenwange gegenüberliegenden Seite angeordnet ist.

Diese Ausgestaltung hat sich als effektiv herausgestellt, dass in einfacher Weise möglich ist, den Rand des Formvlieses sozusagen mit einem U-förmigen Bord zu versehen, wodurch gleichzeitig die in der Einbaulage der Seitenwange nach unten zeigende Öffnung gebildet wird und die äußere Kontur der Seitenwange im Inneren des Schaumes nachgebildet wird.

Es versteht sich, dass die Öffnung nicht zwingend nach unten ausgerichtet sein muss, um das Eindringen des Schaumes in den Hohlraum zu gewährleisten. Der Schaum dringt in vorteilhafter Weise auch in Längsrichtung des Hohlraums beziehungsweise in Längsrichtung der Seitenwange gesehen seitlich in den Hohlraum ein. Wesentlich ist somit, dass der Hohlraum mindestens eine Öffnung aufweist, durch die der Schaum im Schäumprozess in den Hohlraum eindringen kann.

Es ist nämlich auch in vorteilhafter Weise vorgesehen, dass die Stütz- und Versteifungsstruktur des in dem Schaumteil integrierten Formvlieses innerhalb der Mantelfläche des Formvlieses mindestens eine Öffnung aufweist. Eine Öffnung in der Mantelfläche des Formvlieses hat den Effekt, dass sowohl der Schaum in den Hohlraum eintreten kann, als auch eine Schwächung der Stütz- und Versteifungsstruktur möglich ist. Die Anordnung einer oder mehrerer Öffnungen ist somit eine vorteilhafte Möglichkeit die Steifigkeit der Stütz- und Versteifungsstruktur zu beeinflussen. Durch Anordnung einer oder mehrerer Öffnungen in der Mantelfläche des Formvlieses wird die Steifigkeit verringert. Hinzu kommt das die Steifigkeit auch durch die Form der dreidimensionalen Stütz- und Versteifungsstruktur verändert werden kann. Zudem kann die Materialdicke des Formvlieses zumindest abschnittsweise verändert werden, sodass auch hierdurch die Steifigkeit der Stütz- und Versteifungsstruktur bedarfsweise angepasst werden kann. Es versteht sich, dass die Maßnahmen miteinander kombiniert werden können.

Die Erfindung betrifft zudem einen Fahrzeugsitz, insbesondere den Sportfahrzeugsitz, der ein Sitzteil und ein Rückenlehnenteil umfasst, das oder die ein Polsterteil mit einer Seitenwange mit den zuvor beschriebenen Merkmalen aufweist/aufweisen.

In der nachfolgenden Beschreibung ist eine besondere Ausführungsform eines Fahrzeugsitzes beschrieben, die einen Sportfahrzeugsitz betrifft.

Es ist vorgesehen, dass das Polsterteil mindestens eine Seitenwange mit einer Stütz- und Versteifungsstruktur umfasst, wobei die den lokal angeordneten offenen Hohlraum aufweisende Stütz- und Versteifungsstruktur in einem ersten uneingeschäumten Abschnitt des Hohlraums der Stütz- und Versteifungsstruktur im vorderen Bereich der Seitenwange als Komponente einen Sportbügel aufnimmt, und in einem zweiten eingeschäumten Abschnitt des Hohlraums der Stütz- und Versteifungsstruktur im hinteren Bereich der Seitenwange Schaum aufnimmt. Bei einem Sportsitz übernimmt der gebildete Hohlraum sozusagen zwei Funktionen.

In einer ersten Funktion dient der Hohlraum der Anordnung des Sportbügels.

In einer zweiten Funktion dient der Hohlraum der Anordnung des Schaumes, sodass sich in dem hinteren Bereich der Seitenwangen eine sich hinsichtlich der Steifigkeit vom vorderen Bereich unterscheidende Anlagefläche der Seitenwange ergibt. In vorteilhafter Weise schließt sich der uneingeschäumte Abschnitt des Hohlraums an den eingeschäumten Abschnitt an.

Bei der Herstellung des Polsterteils wird lediglich innerhalb des Werkzeuges berücksichtigt, dass ein nicht eingeschäumter Bereich vorgesehen ist, der im vorliegenden Ausführungsbeispiel für den Sportbügel vorgesehen ist, an den sich der eingeschäumte Bereich anschließt, wie in der Beschreibung näher erläutert ist.

Die Erfindung wird nachfolgend anhand der zugehörigen Zeichnungen erläutert. Es zeigen:
- Figur 1: einen Fahrzeugsitz;
- Figur 2A: einen Schnitt A-A durch ein herkömmliches Sitzteil eines Fahrzeugsitzes;
- Figur 2B: eine perspektivische Ansicht auf ein vorgefertigtes Formteil, insbesondere auf eine 3D-Formvlies, gemäß Figur 2A;
- Figur 3A: eine Konstruktionsdarstellung als Draufsicht auf ein Sitzteil eines erfindungsgemäßen Fahrzeugsitzes mit Angabe eines Schnittes B-B;
- Figur 3B: eine Draufsicht auf das erfindungsgemäße vorgefertigte Formteil mit Angabe einer Schnittebene des Schnittes A' - A', der in der gleichen Schnittebene angeordnet ist, analog zu der Schnitt A - A gemäß Figur 2B;
- Figur 3C: eine vereinfachte Darstellung als Seitenansicht auf ein Sitzteil eines erfindungsgemäßen Fahrzeugsitzes mit Angabe eines Schnittes B - B;
- Figur 3D: eine Konstruktionsdarstellung als Seitenansicht auf das Sitzteil des erfindungsgemäßen Fahrzeugsitzes mit Angabe des Schnittes A' - A'; und
- Figur 3E: der Schnitt A' - A' durch das Sitzteil des erfindungsgemäßen Fahrzeugsitzes gemäß Figur 3B und 3D.

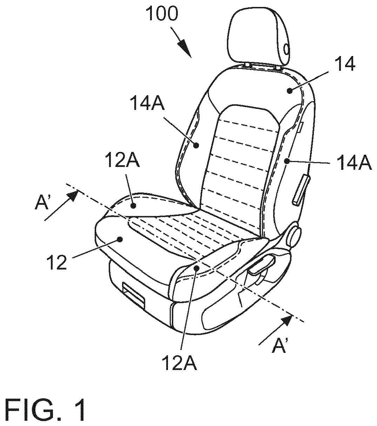

Die Figur 1 zeigt einen Fahrzeugsitz 100, der ein Sitzteil 12 und ein Rückenlehnenteil 14 umfasst. In bekannter Weise, weisen das Sitzteil 12 und das Rückenlehnenteil 14 Seitenwangen auf, die mit den Bezugszeichen 12A und 14A gekennzeichnet sind.

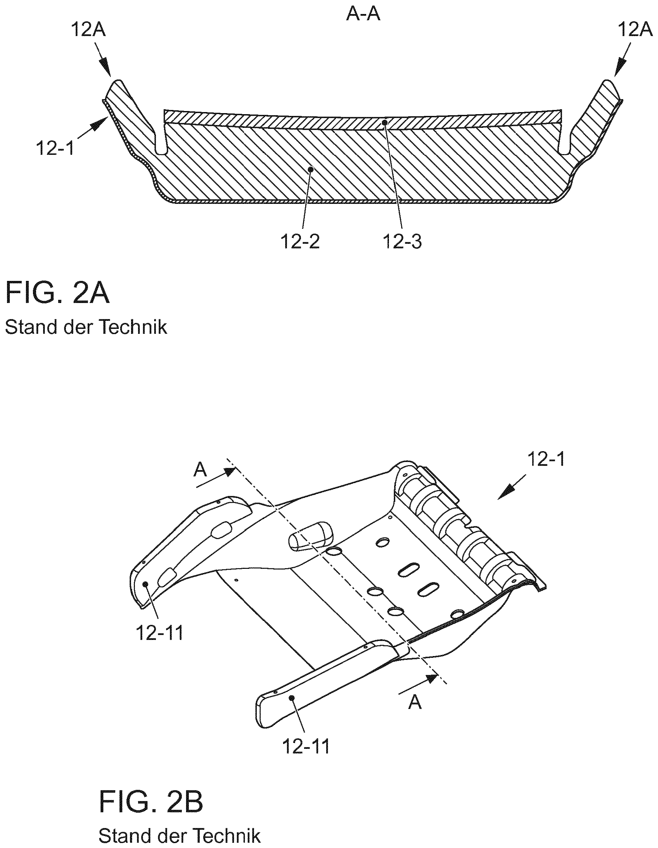

Die Figur 2A zeigt einen Schnitt A-A durch ein herkömmliches Sitzteil 12 eines Fahrzeugsitzes 100. In Figur 2B ist die Schnittebene des Schnittes A - A gemäß Figur 2A eingezeichnet, wobei die Figur 2B ein herkömmliches Formvlies 12-1 in einer perspektivischen Ansicht zeigt.

Das herkömmliche Formvlies 12-1 stellt ein vorgefertigtes Formteil dar, welches durch seine dreidimensionale Verformung auch als 3D-Formvlies bezeichnet wird.

Gemäß Figur 2A umfasst das Sitzteil 12 das 3D-Formvlies 12-1, ein Schaumteil 12-2 und eine Schnittschaumauflage 12-3.

Das vorgeprägte 3D-Formvlies 12-1 umfasst derzeit zwei Taschen 12-11, die im Zusammenbauzustand zur Aufnahme von Sportbügeln dienen, die bei sogenannten Sportsitzen im vorderen Seitenwangenbereich des Sitzteils 12 als Komponenten angeordnet sind.

Die Taschen 12-11 bilden auf den Einbauzustand des 3D-Formvlieses 12-1 bezogen nach unten geöffnete Hohlräume dar.

Der vordere Seitenwangenbereich in dem die Sportbügel in den Taschen 12-11 angeordnet sind, weist eine Länge auf, die circa 1/3 der Gesamtlänge einer Seitenwange 12A beträgt. Derzeit wird das vorgeprägte 3D-Formvlies 12-1 in ein Schaumwerkzeug eingelegt und angeschäumt, wobei das Schaumwerkzeug derart ausgebildet ist, dass das Schaumteil 12-2 im Schäumprozess innerhalb des Hohlraums des Schaumwerkzeuges ausgeschäumt wird, jedoch die Taschen 12-11 nicht mit Schaum ausgeschäumt werden.

Das Werkzeug weist dazu im Bereich der Taschen 12-11 ein Einsatzteil auf, welches sicherstellt, dass die Taschen 12-11 nicht mit Schaum gefüllt werden.

Das Formvlies 12-1 ist randseitig des Schaumteils 12-2 (vgl. Figur 2A) angeordnet und dient als Stützstruktur für das zumindest aus 3D-Formvlies 12-1 und Schaumteil 12-2 ausgebildete Polsterteil.

In den vorkonturierten Taschen 12-11 verbleibenden Hohlräumen werden später Sportbügel angeordnet, die das Sitzteil 12 im nachfolgenden Zusammenbau des Sitzteils 12 komplettieren. Innerhalb des Zusammenbaus wird auch die in Figur 2A dargestellte Schnittschaumauflage 12-3 hinzugefügt, wonach schließlich ein nicht näher dargestellter Bezug auf das Schaumteil 12-2 und die Schnittschaumauflage12-3 angebracht wird, die in dieser Ausführungsvariante das Polsterteil des Sitzteils 12 mit dem 3D-Formvlies 12-1 bilden.

Durch eine Zusammenschau der Figuren 2A und 2B wird deutlich, dass die im vorher beschriebenen Schäumprozess ausgebildeten Seitenwangen 12A beziehungsweise Seitenwangen-Schaumteile 12-2 innerhalb des Schaumwerkzeuges auf der Innenseite des 3D-Formvlieses 12-1 ausgebildet beziehungsweise angeschäumt werden.

Mit anderen Worten, das herkömmliche 3D-Formvlies 12-1 sieht derzeit Vorkehrungen zur Aufnahme der Sportbügel vor und gibt durch seine Innenkontur die sitzwannenseitige Begrenzungskontur beziehungsweise Stützstruktur des Schaumteils 12-2 des Polsterteils vor. Das 3D-Formvlies 12-1 sieht bisher keine dreidimensionale Kontur vor, um eine Kontur der Seitenwangen 12A auszubilden.

Die derzeit angeordneten Taschen 12-11 im 3D-Formvlies 12-1, zwischen Sportbügel und Schaum, dienen zum Schutz des Schaumes vor den im Zusammenbau in den Taschen 12-11 angeordneten Sportbügel. Der Schutz des Schaumes ist notwendig, da im Gebrauch des Fahrzeugsitzes 100 eine lokale Dauerbelastung des auf dem über den Sportbügeln angeordneten Schaum vorliegt.

Von dieser Ausgestaltung des Fahrzeugsitzes 100 ausgehend, wird durch eine Versteifung der Seitenwangen 12A (Seitenwangen 14A im Rückenlehnenteil 14 analog) dafür gesorgt, dass im hinteren Bereich der Seitenwangen 12A ein verbessertes Rückstellverhalten des Schaumes des Schaumteils 12-2 vorliegt.

Diese Steifigkeit ist neben dem Aspekt des Sitzkomforts noch dahingehend von Bedeutung, dass ein verbessertes Rückstellverhalten des Schaumes der Seitenwangen 12A von Vorteil ist, um eine Faltenbildung des oberhalb des Schaumes angeordneten Bezuges (nicht dargestellt) zu vermeiden. Insbesondere dann, wenn der Bezug aus einem Ledermaterial ausgebildet ist, wie es nicht nur aber insbesondere bei Sportsitzen der Fall ist, kommt es in nicht erwünschter Weise schnell zur Faltenbildung des Ledermaterials und zu einem unschönen Erscheinungsbild des Sportsitzes, wenn der Schaum der Seitenwangen 12A nicht eine bestimmte Mindeststeifigkeit aufweist, welche die Faltenbildung weitestgehend verhindert.

Bei dem in den Figuren vorgestellten Fahrzeugsitz 100 handelt es sich beispielsweise um einen Sportsitz, der im vorderen Bereich (= circa 2/3 der Gesamtlänge) der Seitenwangen 12 die Sportbügel in den Taschen 12-11 des 3D-Formvlieses 12-1 aufweist, und der im hinteren Bereich (= circa 1/3 der Gesamtlänge) der Seitenwangen 12A versteifte Seitenwangen 12A aufweist, die bisher im Bedarfsfall dadurch versteift ausgebildet wurden, indem vor dem Einschäumen des 3D-Formvlieses, das heißt vor dem Schäumprozess im hinteren Bereich der auszuschäumenden Seitenwangen 12A ein sogenannter Hartschaumeinleger eingelegt wurde, der nach dem Umschäumen des Hartschaumeinlegers in das Schaumteil 12-2 integriert ist. Dieser Hartschaumeinleger ist in den Figuren nicht dargestellt, da gemäß der vorliegenden Erfindung ein anderer Weg gefunden worden ist, um die Steifigkeit der beispielhaft beschriebenen Seitenwangen 12A zu beeinflussen, wie nachfolgend erläutert wird.

Die gemäß der Erfindung gegenüber dem Stand der Technik geänderten Bauteile sind mit Hochstrich (`) gekennzeichnet.

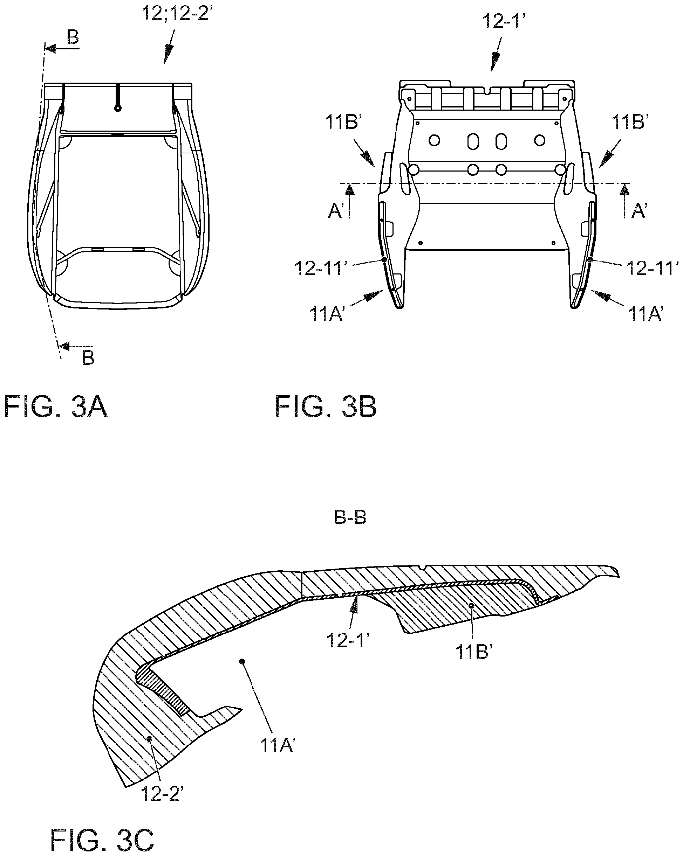

Die Figur 3A zeigt eine Konstruktionsdarstellung als Draufsicht auf das Sitzteil 12 eines erfindungsgemäßen Fahrzeugsitzes 100 mit Angabe der Schnittebene eines Schnittes B - B entlang einer Seitenwange 12A`. Der Schnitt B - B liegt in einer Schnittebene entlang der Längserstreckung der Seitenwange 12A`, wobei die Schnittebene die Seitenwange 12A` in der Mitte schneidet. Die Schnittebene gemäß dem Schnitt B - B verdeutlicht in einer vereinfachten Darstellung den erfindungsgemäßen Aufbau des Schaumteils 12-2` und des 3D-Formvlieses 12-1', die jetzt im Unterschied zum Stand der Technik in vorteilhafter Weise eine Stütz- und Versteifungsstruktur bilden. Das 3D-Formvlies 12-1' hat jetzt nicht mehr nur den Effekt, dass es das Schaumteil 12-2` stützt, sondern, dass das 3D-Formvlies 12-1' jetzt umschäumt oder mit anderen Worten im Schaum integriert angeordnet ist, wodurch das Schaumteil 12-2' zudem versteift ist.

Die Figur 3B zeigt eine Draufsicht auf das erfindungsgemäße vorgefertigte Formteil 12-1' mit Angabe einer Schnittebene des Schnittes A' - A' quer zum Schnitt B - B, der in der gleichen Schnittebene angeordnet ist, wie der Schnitt A - A gemäß Figur 2B.

Die Schnittebene im Schnitt A' - A' ist auch in der Konstruktionsdarstellung als Seitenansicht auf das Sitzteil 12 des erfindungsgemäßen Fahrzeugsitzes 100 angetragen.

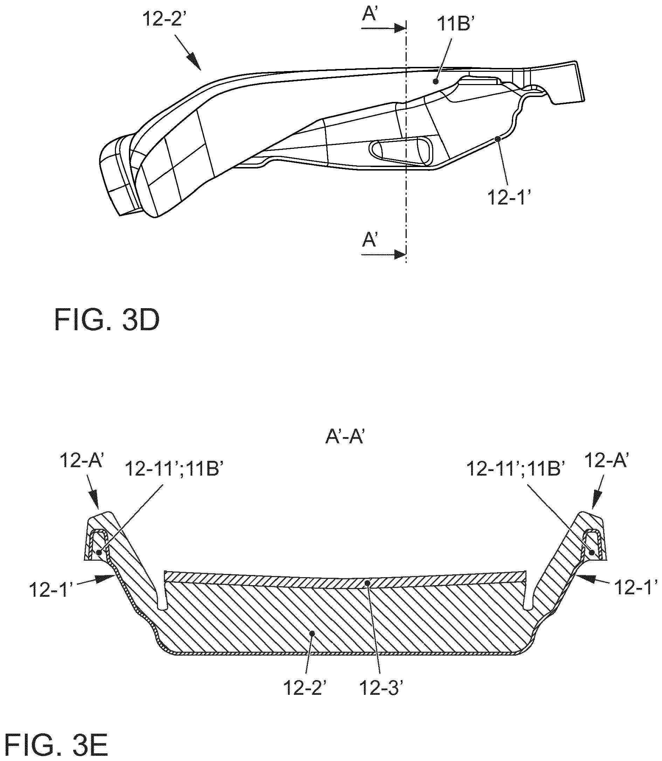

Die Figur 3E zeigt zur Komplettierung in einer weiteren konstruktionsartigen Ansicht den Schnitt A' - A' durch das Sitzteil 12 des erfindungsgemäßen Fahrzeugsitzes 100 gemäß Figur 3B und 3D.

Es wird empfohlen bei der nachfolgenden Beschreibung die Figuren 3A bis 3E in einer Zusammenschau zu betrachten.

In der Draufsicht gemäß Figur 3B auf das erfindungsgemäße vorgefertigte Formteil 12-1' wird deutlich, dass die Taschen 12-11' um circa 1/3 Drittel der Gesamtlänge der Seitenwange 12A verlängert ausgebildet sind. Mit anderen Worten in der Schnittebene gemäß des Schnittes A' - A' ist jetzt ebenfalls ein Hohlraum ausgebildet, der nicht für die Anordnung der Sportbügel benötigt wird.

Bei dem beschriebenen Sportsitz ist jetzt vorgesehen, die länger ausgebildete Tasche 12-11' in einem ersten Abschnitt 11A' im Schäumprozess wie bisher nicht Auszuschäumen, während die Tasche 12-11' in einem zweiten Abschnitt 11B' ausgeschäumt wird.

Erfindungsgemäß wird das vorgeprägte 3D-Formvlies 12-1' in ein Schaumwerkzeug eingelegt, wobei das Schaumwerkzeug derart ausgebildet ist, dass das Schaumteil 12-2` im Schäumprozess innerhalb des Hohlraums des Schaumwerkzeuges ausgeschäumt wird, wobei der erste Abschnitt 11 A' nicht ausgeschäumt wird, jedoch der zweite Abschnitt 11B' ausgeschäumt wird, sodass sich in dem zweiten Abschnitt 11B` eine durch die Außenkontur des 3D-Formvlieses 12-1' vorgegebene innerhalb des Schaumteils 12-2` liegende Stütz- und Versteifungsstruktur der Seitenwange 12A ausbildet. Das Werkzeug weist im ersten Abschnitt 11 A' analog zur bisherigen Vorgehensweise ein entsprechendes Einsatzteil auf, welche sicherstellt, dass die Tasche 12-11' im ersten Abschnitt 11A` nicht mit Schaum gefüllt wird.

Aus Figur 3C wird deutlich, dass das erfindungsgemäße Schaumteil 12-2` den zweiten Abschnitt 11B` aufweist, der von der Außenfläche des 3D-Formvlieses 12-1' umgriffen wird, wie am besten in Figur 3E sichtbar ist.

Der zweite Abschnitt 11B' des Schaumteils 12-2` ist gemäß Figur 3E auf der von der Innenfläche des 3D-Formvlieses 12-1' gebildeten Kontur und auf der von der Außenfläche des 3D-Formvlieses 12-1' gebildeten Kontur, die den taschenartigen Hohlraum 12-11' im zweiten Abschnitt 11B' bildet, mit Schaum versehen.

In Figur 3D ist gemäß der Außenansicht das erfindungsgemäße Schaumteil 12-2` dargestellt, in dem im zweiten Abschnitt 11B' die verlängerte Tasche 12-11' des 3D-Formvlieses 12-1' integriert (nicht sichtbar) angeordnet ist.

Durch Vergleich der Figuren 2A und 3B wird deutlich, dass die Seitenwange 12A` im hinteren Bereich jetzt die aus dem 3D-Formvlies 12-1' gebildete Versteifungsstruktur aufweist.

Erfindungsgemäß ist zur Optimierung des Schaumprozesses vorgesehen, dass das 3D-Formvlies 12-1' im zweiten Abschnitt 11B' innerhalb seiner die Tasche 12-11 ` bildenden Mantelfläche weitere Öffnungen aufweist, um den Schaumeintrag auf der von dem Schaumteil 12-2' abgewandten Seite in die durch den zweiten Abschnitt 11B' gebildete Tasche 12-11' zu verbessern, und um die Steifigkeit der Seitenwange 12A` zu beeinflussen.

Erfindungsgemäß ist ferner vorgesehen, dass die Steifigkeit der Seitenwangen 12A` im zweiten Abschnitt 11B' durch Ausbildung unterschiedlicher dreidimensionaler Konturen des vorgefertigten 3D-Formvlieses 12-1' und/oder durch Ausbildung unterschiedlicher Materialstärke beeinflusst werden kann.

Es ist somit erfindungsgemäß möglich, ein Sitzteil-Polster und/oder ein Rückenlehnenteil-Polster derart auszubilden, dass das jeweilige Polster zumindest ein 3D-Formvlies 12-1' mit dreidimensionalen Konturen aufweist, die einen Hohlraum bilden, der bei dem Schäumprozess des Schaumteils 12-2` ausgeschäumt wird.

Dadurch lassen sich nicht nur komplette Seitenwangen oder Seitenwangenbereiche, sondern auch andere gewünschte Bereiche im Rückenlehnenteil-Polster und/oder ein Rückenlehnenteil-Polster hinsichtlich ihrer Steifigkeit anpassen. Diese Anpassung der Steifigkeit ist in vorteilhafter Weise möglich, ohne dass beispielsweise für diese Bereiche ein anderer Schaum eingesetzt werden muss, um die Steifigkeit anzupassen. Die erforderlichen Maßnahmen zur Konturanpassung des 3D-Formvlieses 12-1' und des Werkzeuges sind unter Berücksichtigung einer Serienherstellung mit hohen Stückzahlen gering.

### Bezugszeichenliste

- 100: Fahrzeugsitz
- 12: Sitzteil
- 12-3: Schnittschaumauflage
- 14: Rückenlehnenteil

### Stand der Technik

- 12A: Seitenwange
- 12-1: Formvlies, 3D-Formvlies als Stützstruktur
- 12-11: Hohlraum, Tasche (nicht eingeschäumt)
- 12-2: Schaumteil

### Erfindung

- 12A`: Seitenwange
- 12-1': Formvlies, 3D-Formvlies als Stütz- und Versteifungsstruktur
- 12-11': Hohlraum, Tasche
- 11A': erster Abschnitt der Tasche
- 11B': zweiter Abschnitt der Tasche (eingeschäumt)
- 12-2`: Schaumteil

## Patentansprüche

1. Polsterteil mit einer Seitenwange (12A'), für einen Fahrzeugsitz, zumindest umfassend ein Schaumteil (12-2'), welches in einem Schäumprozess mit einem vorgefertigten Formvlies (12-1') eine feste Verbindung bildet, wobei das Formflies (12-1') eine Stützstruktur für das Schaumteil (12-2') bildet, wobei das Formvlies (12-1 `) mindestens einen lokal angeordneten offenen Hohlraum (12-11') aufweist, der zumindest abschnittsweise ausgeschäumt ist, sodass das Schaumteil (12-2') zumindest in einem Abschnitt (11B') des Hohlraums (12-11') des Formvlieses (12-1') eine in den Schaum eingeschäumte Stütz- und Versteifungsstruktur aufweist, **dadurch gekennzeichnet, dass** das Formvlies (12-1') einen ersten uneingeschäumten Abschnitt (11A') des Hohlraums (12-11`) im vorderen Bereich der Seitenwange (12A') bildet, in dem ein Sportbügel aufnehmbar ist und in einem zweiten eingeschäumten Abschnitt (11B') des Hohlraums (12-11') im hinteren Bereich der Seitenwange (12A') den Schaum aufnimmt.

2. Polsterteil mit einer Seitenwange (12A') nach Anspruch 1, **dadurch gekennzeichnet, dass** das Formvlies (12-1') zumindest abschnittsweise eine dreidimensionale Kontur aufweist, die im Wesentlichen einer Kontur der Seitenwange (12A') entspricht.

3. Polsterteil mit einer Seitenwange (12A') nach den Ansprüchen 1 und 2, **dadurch gekennzeichnet, dass** das Formvlies (12-1') zumindest abschnittsweise eine U-förmige dreidimensionale Kontur aufweist, die im Wesentlichen der Kontur der Seitenwange (12A') entspricht, wobei die Öffnung des Hohlraums (12-11') auf einer der Oberseite der Seitenwange (12A`) gegenüberliegenden Seite angeordnet ist.

4. Polsterteil mit einer Seitenwange (12A') nach Anspruch 1, **dadurch gekennzeichnet, dass** das Formvlies (12-1') innerhalb der Mantelfläche des Formvlieses (12-1') mindestens eine Öffnung aufweist.

5. Fahrzeugsitz (100) umfassend ein Sitzteil (12) und ein Rückenlehnenteil (14), das oder die ein Polsterteil mit einer Seitenwange (12A') nach mindestens einem der Ansprüche 1 bis 4 aufweist/aufweisen.

## Claims

1. Upholstery part with a side support (12A') for a vehicle seat, at least comprising a foam part (12-2') which forms a firm connection with a prefabricated moulded nonwoven (12-1') in a foaming process, the moulded nonwoven (12-1') forming a support structure for the foam part (12-2'), wherein the moulded nonwoven (12-1') has at least one locally arranged open cavity (12-11') which is foamed out at least in sections, so that the foam part (12-2') has, at least in a section (11B') of the cavity (12-11') of the moulded nonwoven (12-1'), a supporting and stiffening structure foamed into the foam, **characterised in that** the moulded nonwoven (12-1') forms a first non-foamed section (11A') of the cavity (12-11') in the front region of the side support (12A') in which a sports hoop can be received and obtains the foam in a second foamed section (11B') of the cavity (12-11') in the rear region of the side support (12A').

2. Upholstery part with a side support (12A') according to claim 1, **characterised in that** the moulded nonwoven (12-1') has, at least in sections, a three-dimensional contour which substantially corresponds to a contour of the side support (12A').

3. Upholstery part with a side support (12A') according to claims 1 and 2, **characterised in that** the moulded nonwoven (12-1') has, at least in sections, a U-shaped three-dimensional contour which corresponds substantially to the contour of the side support (12A'), the opening of the cavity (12-11') being arranged on a side opposite the upper side of the side support (12A').

4. Upholstery part with a side support (12A') according to claim 1, **characterised in that** the moulded nonwoven (12-1') has at least one opening within the circumferential surface of the moulded nonwoven (12-1').

5. Vehicle seat (100) comprising a seat portion (12) and a backrest portion (14) having a cushion portion with a side support (12A') according to at least one of claims 1 to 4.

## Revendications

1. Pièce de rembourrage avec une support latérale (12A') pour un siège de véhicule, comprenant au moins une pièce en mousse (12-2') qui forme une liaison solide avec un non-tissé moulé préfabriqué (12-1') dans un processus de moussage, le non-tissé moulé (12-1') formant une structure de soutien pour la pièce en mousse (12-2'), le non-tissé moulé (12-1') présentant au moins un espace creux ouvert (12-11') disposé localement, qui est rempli de mousse au moins par sections, de sorte que la pièce en mousse (12-2') présente, au moins dans une section (11B') de l'espace creux (12-11') du non-tissé moulé (12-1'), une structure de soutien et de renforcement incorporée par moussage dans la mousse, **caractérisé en ce que** le non-tissé moulé (12-1') forme une première section non moussée (11A') de l'espace creux (12-11') dans la zone avant de la support latérale (12A'), dans laquelle un arceau de sport peut être reçu, et reçoit la mousse dans une deuxième section moussée (11B') de l'espace creux (12-11') dans la zone arrière de la support latérale (12A').

2. Pièce de rembourrage avec une support latérale (12A') selon la revendication 1, **caractérisée en ce que** le non-tissé moulé (12-1') présente au moins par sections un contour tridimensionnel qui correspond essentiellement à un contour de la support latérale (12A').

3. Pièce de rembourrage avec une support latérale (12A') selon les revendications 1 et 2, **caractérisé en ce que** le non-tissé moulé (12-1') présente au moins par sections un contour tridimensionnel en forme de U qui correspond essentiellement au contour de la support latérale (12A'), l'ouverture de la cavité (12-11') étant disposée sur un côté opposé à la face supérieure de la support latérale (12A').

4. Pièce de rembourrage avec une support latérale (12A') selon la revendication 1, **caractérisée en ce que** le non-tissé moulé (12-1') présente au moins une ouverture à l'intérieur de la surface d'enveloppe du non-tissé moulé (12-1').

5. Siège de véhicule (100) comprenant une partie d'assise (12) et une partie de dossier (14), qui présente(nt) une pièce de rembourrage avec une support latérale (12A') selon au moins l'une des revendications 1 à 4.
